# EUROPEAN PATENT SPECIFICATION

(11) **EP 4 246 251 B1**
(45) Date of publication and mention of the grant of the patent: **27.05.2026**
(21) Application number: 23160433.1
(22) Date of filing: 07.03.2023
(51) Int. Cl.: G05B 19/05, G06N 20/00

(54) **MACHINE LEARNING OPTIMIZATION OF CONTROL CODE IN AN INDUSTRIAL AUTOMATION ENVIRONMENTS**
MASCHINENLERNOPTIMIERUNG EINES STEUERUNGSCODES IN INDUSTRIELLEN AUTOMATISIERUNGSUMGEBUNGEN
OPTIMISATION D'APPRENTISSAGE AUTOMATIQUE DE CODE DE COMMANDE DANS DES ENVIRONNEMENTS D'AUTOMATISATION INDUSTRIELLE

(30) Priority: 18.03.2022 US 202217698448
(43) Date of publication of application: 20.09.2023
(73) Proprietor: Rockwell Automation Technologies, Inc., Mayfield Heights OH 44124 (US)
(72) Inventor: Reynolds, Jordan C., Mayfield Heights, OH (US); Hagerbaumer, John J., Mayfield Heights, OH (US); Mahr, Troy W., Mayfield Heights, OH (US); Jacobsen, Thomas K., Mayfield Heights, OH (US); Scaturchio, Giancarlo, Mayfield Heights, OH (US)
(74) Representative: Grünecker Patent- und Rechtsanwälte PartG mbB

(56) References cited:
- WO-A1-2021/002110
- CHEN YUQI YUQICHEN@SMU EDU SG ET AL: "Code integrity attestation for PLCs using black box neural network predictions", PROCEEDINGS OF THE 32ND ACM CONFERENCE ON HYPERTEXT AND SOCIAL MEDIA, ACMPUB27, NEW YORK, NY, USA, 20 August 2021 (2021-08-20), pages 32 - 44, XP058651372, ISBN: 978-1-4503-8562-6, DOI: 10.1145/3468264.3468617

## Description

### BACKGROUND

Industrial manufacturing environments generate huge quantities of data at very fast speeds making the extraction of enterprise-level insights challenging. In industrial automation environments, control systems are used to drive various operations along an industrial line. Control code is used by industrial drives or Programmable Logic Controllers to drive industrial assets, devices, and sensors in an industrial process. Operational data produced during runtime contains important information about the status, performance, or quality of the industrial process, but can be difficult to leverage in near-real time given the enormous amount of computing power and time that goes into operational analytics. Control programs are typically developed by programmers prior to implementation and the ability to adjust control programs after implementation or during runtime is limited. Unfortunately, manually editing control programs in response to operational data is a difficult and time-consuming process. Moreover, industrial automation environments do not effectively or efficiently utilize historical data to generate control programs.

Machine learning algorithms are designed to recognize patterns and automatically improve through training and the use of data. Examples of machine learning algorithms include artificial neural networks, nearest neighbor methods, gradient-boosted trees, ensemble random forests, support vector machines, naive Bayes methods, and linear regressions. A machine learning algorithm comprises an input layer and an output layer, wherein complex analyzation takes places between the two layers. Various training methods are used to train machine learning algorithms wherein an algorithm is continually updated and optimized until a satisfactory model is achieved. One advantage of machine learning algorithms is their ability to learn by example, rather than needing to be manually programmed to perform a task, especially when the tasks would require a near-impossible amount of programming to perform the operations in which they are used.
Chen Yuqi et al: "Code Integrity Attestation for PLCs using Black Box Neural Network Predictions", PROCEEDINGS OF THE 32ND ACM CONFERENCE ON HYPERTEXT AND SOCIAL MEDIA, ACMPUB27, NEW YORK, NY, USA, pages 32-44, DOI: 10.1145/3468264.3468617, proposes a practical code integrity checking solution based on privacy preserving black box models that instead attest the input/output behavior of PLC programs. Using faithful offline copies of the PLC programs, the technique identifies their most important inputs through an information flow analysis, executes them on multiple combinations to collect data, then trains neural networks able to predict PLC outputs from their inputs. By exploiting the black box nature of the model, the solution maintains the privacy of the original PLC code and does not assume that attackers are unaware of its presence.
WO 2021/002110 A1 relates to an operating apparatus capable of improving accuracy of prediction of a quality of a product by a machine learning model in case where learning is performed by inputting, as learning input data, multi-dimensional physical property relevance data, which is derived from multi-dimensional physical property data of the product, to the machine learning model.

### OVERVIEW

It is the object of the present invention to improve prior art systems. This object is solved by the subject matter of the independent claims. Preferred embodiments are defined by the dependent claims.

This Overview is provided to introduce a selection of concepts in a simplified form that are further described below in the Detailed Description. This summary is not intended to identify key features or essential features of the claimed subject matter, nor is it intended to be used as an aid in determining the scope of the claimed subject matter.

Various embodiments of the present technology generally relate to solutions for integrating machine learning models into industrial automation environments. Some embodiments comprise a system that is configured to optimize a functional block diagram that correspond to a control program in an industrial automation environment. In the system, a design application component generates a functional block diagram configured for implementation by a programmable logic controller to control an automated process. A machine learning interface component generates feature vectors based on the functional block diagram that are configured for ingestion by a machine learning model. The machine learning interface component supplies the feature vectors to the machine learning model to obtain recommendation feedback on the functional block diagram from a machine learning model. The design application component receives a machine learning output that comprises the recommendation feedback generated by the machine learning model and responsively modifies the functional block diagram based on the recommendation feedback.

Some embodiments comprise a method to optimize a functional block diagram that corresponds to a control program in an industrial automation environment. The method entails generating a functional block diagram configured for implementation by a programmable logic controller to control an automated process. The method continues by generating feature vectors based on the functional block diagram that are configured for ingestion by the machine learning model. The method continues by supplying the feature vectors to the machine learning model to obtain recommendation feedback on the functional block diagram from a machine learning model. The method continues by receiving a machine learning output that comprises the recommendation feedback generated by the machine learning model and responsively modifying the functional block diagram based on the recommendation feedback.

In some embodiments, an apparatus comprises computer readable storage media and processors operatively coupled with the computer readable storage media. The storage media store program instructions to optimize a functional block diagram for a control program in an industrial automation environment. When the program instructions are executed by the processors, the computing apparatus generates a functional block diagram configured for implementation by a programmable logic controller to control an automated process. The computing apparatus generates feature vectors based on the functional block diagram that are configured for ingestion by a machine learning model. The computing apparatus supplies the feature vectors to the machine learning model to obtain recommendation feedback on the functional block diagram from a machine learning model. The computing apparatus receives a machine learning output that comprises the recommendation feedback generated by the machine learning model and responsively modifies the functional block diagram based on the recommendation feedback.

### BRIEF DESCRIPTION OF THE DRAWINGS

Many aspects of the disclosure can be better understood with reference to the following drawings. The components in the drawings are not necessarily drawn to scale. Moreover, in the drawings, like reference numerals designate corresponding parts throughout the several views.
Figure 1 illustrates an exemplary industrial automation environment to optimize a functional block diagram using machine learning techniques.
Figure 2 illustrates an exemplary operation of an industrial automation environment to optimize a functional block diagram using machine learning techniques.
Figure 3 illustrates an exemplary industrial automation environment to optimize a functional block diagram using machine learning techniques.
Figure 4 illustrates an exemplary operation of an industrial automation environment to optimize a functional block diagram using machine learning techniques.
Figure 5 illustrates an exemplary User Interface (UI) in an industrial automation environment.
Figure 6 illustrates an exemplary UI in an industrial automation environment.
Figure 7 illustrates an exemplary computing device that may be used in accordance with some embodiments of the present technology.

The drawings have not necessarily been drawn to scale. Similarly, some components or operations may not be separated into different blocks or combined into a single block for the purposes of discussion of some of the embodiments of the present technology. Moreover, while the technology is amendable to various modifications and alternative forms, specific embodiments have been shown by way of example in the drawings and are described in detail below.

### DETAILED DESCRIPTION

The following description and associated figures teach the best mode of the invention. For the purpose of teaching inventive principles, some conventional aspects of the best mode may be simplified or omitted. The following claims specify the scope of the invention. Note that some aspects of the best mode may not fall within the scope of the invention as specified by the claims. Those skilled in the art will appreciate that the features described below can be combined in various ways to form multiple variations of the invention. As a result, the invention is not limited to the specific examples described below, but only by the claims.

Various embodiments of the present technology generally relate to solutions for integrating machine learning models into industrial automation environments. More specifically, embodiments of the present technology include systems and methods for implementing applying machine learning techniques to industrial control code to generate code optimizations, indicate code alerts, produce code recommendations, and improve performance of existing control programs. Generally, industrial control code provides instructions for controlling and performing certain operations within an industrial environment via controllers like Programmable Logic Controllers (PLCs). The controllers execute the control code to control downstream devices, machinery, and automated processes.

The present technology serves to greatly enhance industrial control by enabling the use of machine learning models within control code for more advanced control. Industrial automation environments often fail to effectively integrate machine learning models to assist in generating control code. In an implementation of the present technology, machine learning models may be made available to programmers in the industrial control programming environment just as another industrial asset may be. For example, a control code programming environment may traditionally allow a programmer to "drag and drop" known industrial assets into the process being programmed. The selected asset may correspond to machinery in an automated processes come with pre-set parameters and/or settings. The programmer can then connect the asset to other assets, devices, models, inputs, or outputs when constructing the process. The programmer may toggle a machine learning model to receive machine learning feedback on the process being programmed. In accordance with the present disclosure, the machine learning model may ingest the control code and generate a machine learning output that comprises feedback information. The programmer may then receive feedback from the model and choose to implement the suggested feedback. For example, the feedback may comprise industrial asset suggestions that can be connected into the process being programmed.

The models are capable of being applied to an existing control program utilizing similar input/output (I/O) mechanics as other industrial assets. In accordance with the present disclosure, machine learning models may be connected with external networks and/or other elements within the industrial automation environment like PLCs. The machine learning models may receive training data from the external networks and the other elements in the industrial automation environment. In an embodiment, a model may consume data relevant to live operations within an industrial automation environment and provide an output to optimize control code based on the consumed data. For example, an input to the machine learning model may be data from a pressure sensor monitoring an evaporator temperature pressure within a distillation process. In response to input from the pressure sensor, the model may determine that control code being created by a programmer should be modified to account for deficiencies in the distillation process. The output from the model may modify a control program to optimize the distillation process to achieve a higher quality output.

In another example, a model implemented in an industrial automated environment may receive control code comprising completed projects from an external network. Based on the completed projects, the model may determine the format, structure, and composition of control code that had been previously implemented by automated industrial environments. The model may provide an output to automatically complete or partially-complete projects that are being worked on by a programmer. For example, a programmer may have partially completed a project and the model may ingest the partially complete project and responsively output a completed project based on the ingested training data.

In accordance with the present disclosure, a machine learning model comprises one or more machine learning algorithms that are trained based on historical data and/or other types of training data. A machine learning model may employ one or more machine learning algorithms through which data can be analyzed to identify patterns, make decisions, make predictions, or similarly produce output that can inform control code and/or parameters. Examples of machine learning algorithms that may be employed solely or in conjunction with one another include artificial neural networks, nearest neighbor methods, ensemble random forests, support vector machines, naive Bayes methods, linear regressions, or similar machine learning techniques or combinations thereof capable of predicting output based on input data. Determining which machine learning methods to use may depend on the specific purpose or functions required in a particular industrial setting. In some examples, a machine learning asset outputs a decision indicating an alert with regards to the structure and/or composition of control code generated by a programmer, wherein that output can be used to adjust parameters and/or settings to optimize control code. In other examples the machine learning asset outputs the determined parameters and/or settings directly for integration into the control code. Other outputs with a similar purpose may exist and are contemplated herein.

Machine learning models may be implemented to perform asset and/or optimization in industrial automation environments. That is, models may be used to edit control code such that a device or process is optimized according to a specific control scheme. For example, models can be trained and used to optimize performance, yield, energy consumption, cost, and the like.

Machine learning models may be deployed on premises in an industrial automation environment or off-site. For example, the machine learning model may be implemented in a cloud computing environment and have a live connection with a programming system configured to generate control code. Machine learning models inherently have a useful lifecycle as the environment around it changes. Over time, the models become ubiquitous and can, in essence, wear out, just like any other machine or sensor on an industrial line. Thus, the machine learning assets disclosed herein may be periodically replaced and/or retrained to maintain the integrity of machine learning outputs.

To accompany the use of control program integrated models, corresponding faceplates, displays, Human Machine Interfaces (HMIs), and the like are contemplated herein to provide intuitive representations and interfaces to models on-site. A machine learning model faceplate may comprise basic controls and/or visuals relevant to the control program that the model is assisting within the control environment. In this manner, provided machine learning can be brought into the on-site user experience more fully as well as into the programming environment. For example, an operator can view or use a model faceplate on a kiosk within the industrial automation environment to perform a task such as turning the model on or off, disconnecting the model from the line, or monitoring the model. The faceplate, in just a few examples, may also be useful for performing slightly more complex tasks such as offsetting parameters, providing inputs, tuning parameters of the model, overriding the model, or checking the status of the model.

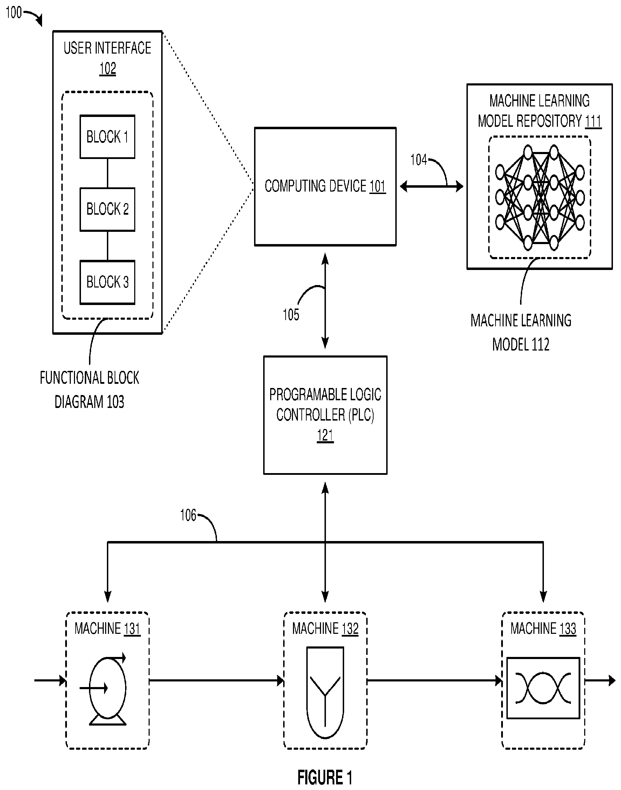

Now referring to the Figures, Figure 1 illustrates industrial automation environment 100 to optimize a functional block diagram using machine learning techniques. Industrial automation environment 100 performs services like factory automation, factory control, machine control, smart manufacturing, machine communication and organization, and the like. Industrial automation environment 100 comprises computing device 101, User Interface (UI) 102, Functional Block Diagram 103, machine learning model repository 111, machine learning model 112, Programmable Logic Controller (PLC) 121, and machines 131-133. In other examples, industrial automation environment 100 may include fewer or additional components than those illustrated in Figure 1. Likewise, the illustrated components of industrial automation environment 100 may include fewer or additional components, assets, or connections than shown. Each of computing device 101, UI 102, machine learning model repository 111, and PLC 121, may be representative of a single computing apparatus or multiple computing apparatuses.

Computing device 101 comprises one or more computing apparatuses configured to host an application to generate functional block diagram 103. Computing device 101 may host additional applications to interface with machine learning model repository 111 and PLC 121. It should be appreciated that the specific number of applications/modules hosted by computing device 101 is not limited. Exemplary applications hosted by computing device 101 to generate functional block diagram 103 include Studio 5000 and the like. Functional block diagram 103 comprises "Block 1", "Block 2", and "Block 3" that are connected in series. Computing device 101 may transfer functional block diagram 103 to PLC 121 to control the operations of machines 131-133. Typically, the blocks of block diagram 103 comprise control code chunks that correspond to machines 131-133. For example, Block 1 illustrated on Figure 1 may correspond to machine 131 and comprise a code to control the various components that comprise machine 131.

Computing device 101 is functionally coupled to UI 102. UI 102 comprises a display, keyboard, touchscreen, tablet, and the like. UI 102 displays a Guided User Interface (GUI) that allows a user to interact with the application(s) hosted by computing device 101, including the design application configured to generate functional block diagram 103. A user may interact with the GUI via UI 102 to generate functional block diagram 103. For example, a user may select, drag-and-drop, or perform some type of action via UI 102 and the GUI to construct functional block diagram 103.

Computing device 101 is functionally coupled to machine learning model repository 111. For example, computing device 101 may host a machine learning interface application to communicate with machine learning model repository 111. Machine learning model repository 111 hosts machine learning model 112 configured to process and optimize functional block diagrams (e.g., diagram 103). Machine learning model 112 is representative of any machine learning model implemented within industrial automation environment 100 as described herein. The machine learning model 112 hosted by repository 111 may be trained using input data generated from by PLC 121, machines 131-133 and/or external sources such as a database (not shown). Machine learning model repository 111 may receive and process a functional block diagram generated by computing device 101. Machine learning model 112 may generate outputs that indicate errors, optimizations, suggestions, and the like for a functional block diagram received by machine learning model repository 111. Machine learning model repository 111 may transfer the outputs to computing device 101 for display on UI 102.

Computing device 101 is functionally coupled to PLC 121. PLC 121 is functionally coupled to machines 131-133. PLC 121 receives and implements a functional block diagram from computing device 101 to control the operation of machines 131-133. The blocks that constitute functional block diagram 103 comprise industrial control code that provide instructions for PLC 121 to control the operations of machines 131-133. PLC 121 executes the control code to control downstream devices and machinery. PLC 121 identifies which blocks of functional block diagram 103 correspond to the ones of machines 131-133. For example, PLC 121 may process an Identity (ID) code for "Block 1" and determine that it corresponds to machine 131. PLC 121 may implement the control codes to activate the various components to control machines 131-133. For example, the control code may specify a power level to operate a motor to drive the operation of machine 132.

Machines 131-133 are representative of an exemplary automated industrial process. Machines 131-133 are connected in series and are configured to carry out an industrial process. The industrial process may comprise manufacturing, chemical production, food processing, or any other type of industrial process. Machines 131-133 receive control instructions from PLC 121 and operate in response to the control instructions to conduct the industrial operation.

Computing device 101, UI 102, machine learning model repository 111, PLC 121, and machines 131-133 communicate over links 104-106 using communication technologies like industrial ethernet, Institute of Electrical and Electronic Engineers (IEEE) 802.3 (ENET), IEEE 802.11 (WIFI), Bluetooth, Time Division Multiplex (TDM), Data Over Cable System Interface Specification (DOCSIS), Internet Protocol (IP), General Packet Radio Service Transfer Protocol (GTP), and/or some other type of wireline and/or wireless networking protocol. Links 104-106 comprise metallic links, glass fibers, radio channels, or some other communication media. The links use ENET, WIFI, virtual switching, inter-processor communication, bus interfaces, and/or some other data communication protocols.

Computing device 101, UI 102, machine learning model repository 111, PLC 121, and machines 131-133 comprise microprocessors, software, memories, transceivers, bus circuitry, and the like. The microprocessors comprise Central Processing Units (CPU), Graphical Processing Units (GPU), Application-Specific Integrated Circuits (ASIC), and/or the like. The memories comprise Random Access Memory (RAM), flash circuitry, disk drives, and/or the like. The memories store software like operating systems, user applications, radio applications, and network functions. The microprocessors retrieve the software from the memories and execute the software to drive the operation of industrial automation environment 100 as described herein.

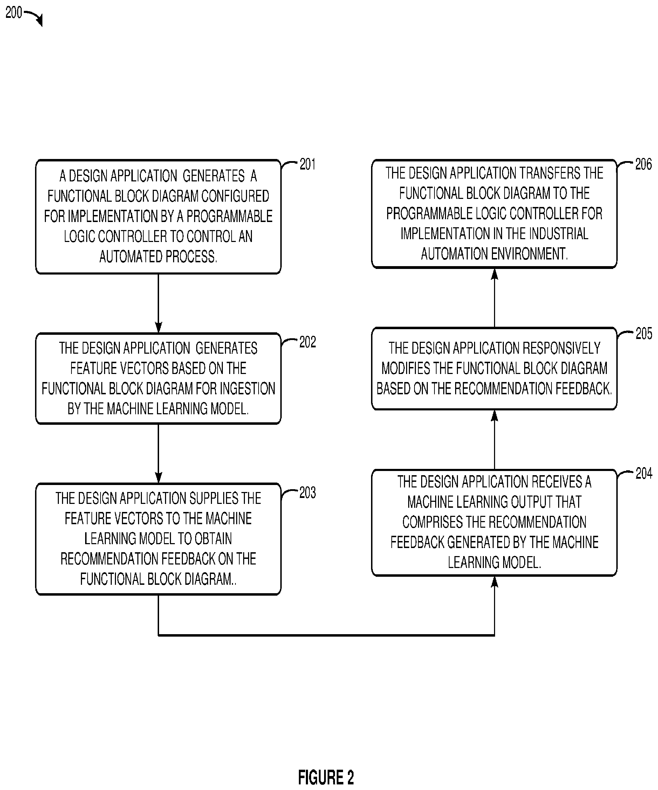

In some examples, industrial automation environment 100 implements process 200 illustrated in Figure 2. It should be appreciated that the structure and operation of industrial automation environment 100 may differ in other examples.

Figure 2 illustrates process 200. Process 200 comprises a functional block optimization process. Program 200 may be implemented in program instructions in the context of any of the software applications, module components, or other such elements of one or more computing devices. The program instructions direct the computing device(s) to operate as follows, referred to in the singular for the sake of clarity.

In operation, a design application generates a functional block diagram configured for implementation by a PLC to control an automated process (201). The design application generates feature vectors based on the functional block diagram for ingestion by the machine learning model (202). The design application supplies the feature vectors to the machine learning model to obtain recommendation feedback on the functional block diagram (203). The design application receives a machine learning output that comprises the recommendation feedback generated by the machine learning model (204). The design application responsively modifies the functional block diagram based on the recommendation feedback (205). The design application transfers the functional block diagram to the programmable logic controller for implementation in the industrial automation environment (206).

Referring back to Figure 1, industrial automation environment 100 includes a brief example of process 200 as employed by one or more applications hosted by computing device 101. In operation, a design application hosted by computing device 101 generates functional block diagram 103 for implementation by PLC 121 (201). For example, the application may receive a series of user inputs via UI 102 to generate functional block diagram 103. The user inputs may comprise drag-and-drop actions to connect Blocks 1-3 on UI 102 to form functional bock diagram 103. The application hosted by computing device 101 may comprise Studio 5000, or some other type of automated process design application. In this example, Block 1 corresponds to machine 131, Block 2 correspond to machine 132, and Block 3 corresponds to machine 133. Each of Blocks 1-3 comprise control code like ladder logic that dictate the operation of their corresponding machines.

A machine learning interface application hosted by computing device 101 generates feature vectors based on functional block diagram 103 to receive recommendation feedback on functional block diagram 103 (202). For example, the application may receive a user input via UI 102 that requests machine learning feedback on functional block diagram 103 and responsively generates the feature vectors. The feature vectors comprise an n-dimensional vector of numerical features that represent functional block diagram 103 and are configured for ingestion by machine learning model. The application may generate the feature vectors based on an image of functional block diagram 103, the control code comprising Blocks 1-3, or some other type of representation of functional block diagram 103. The machine learning interface application supplies the feature vectors to machine learning model 112 (203). For example, the application hosted computing device 101 may transfer the feature vectors to machine learning model repository 111 via communication links and upon reception, are ingested by machine learning model 112.

The design application hosted by computing device 101 receives a machine learning output from machine learning model repository 111 that comprises the recommendation feedback on the functional block diagram generated by machine learning model 112 (204). Machine learning model 112 takes the feature vectors as an input and utilizes machine learning algorithms to generate an output that comprises the feedback. The recommendation feedback may comprise an error alert, a block recommendation, a connection recommendation, an optimization, or some other type of feedback on functional block diagram 103. For example, an error may indicate that Block 1 is not properly configured, a block recommendation may indicate additional blocks (e.g., Block 4) to add to functional block diagram 103, and an optimization may indicate a change to Block 2 to improve performance of its corresponding machine. The application may present to the recommendation feedback to functional block diagram 103 on UI 102 for review by a user.

The design application hosted by computing device 101 responsively modifies functional block diagram 103 based on the recommendation feedback (205). The modification may entail presenting a proposed modification on UI 102. A user may interact with UI 102 to implement the proposed modification. In response to user input, the application may modify functional block diagram 103 to implement the recommendation feedback generated by machine learning model 112.

The design application hosted by computing device 101 transfers modified functional block diagram 103 to PLC 121 for implementation in machines 131-133 (206). PLC 121 may execute modified functional block diagram 103 to drive the operation of machines 131-133. For example, PLC 121 may execute Block 1 and transfer the resulting executed code to machine 131 to drive the operation of machine 131 as specified by Block 1. Referring back to Figure 2, it should be appreciated that the operation of process 200 and the computing elements that implement process 200 may differ in other examples.

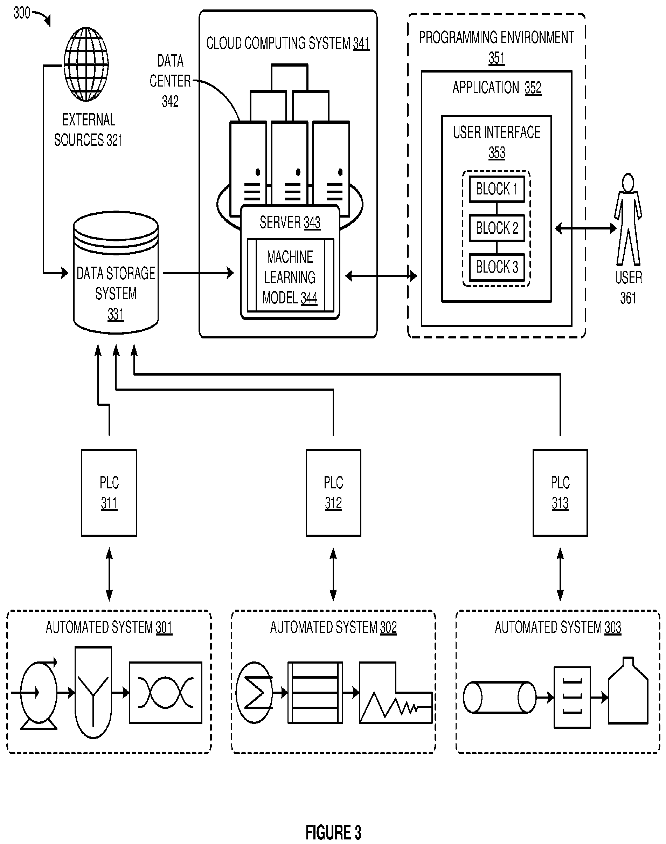

Figure 3 illustrates an industrial automation environment 300 to optimize a functional block diagram utilizing machine learning techniques. Industrial automation environment 300 comprises an example of industrial automation environment 100, however environment 100 may differ. Industrial automation environment 300 comprises automated systems 301-303, PLCs 311-313, external sources 321, data storage system 331, cloud computing system 341, programming environment 351, and user 361. Cloud computing system 341 comprises data center 342, server 343, and machine learning model 344. Programming environment 351 comprises application 352 and User Interface (UI) 353. User 361 is depicted as a human being and is representative of a programmer, operator, or some other type of user.

Automated systems 301-303 are representative of separate automated industrial processes. In this example, automated systems 301-303 each comprise a set of machines connected in series that are configured to carry out an industrial process. Automated systems 301-303 may carry out an identical, substantially similar, or different industrial process to one another. The industrial processes may comprise manufacturing processes, chemical production processes, food processing processes, or other types of automated industrial processes. Although automated systems 301-303 are depicted with three machines each, in other examples automated systems may comprise a different number of machines. For example, automated system 301 may comprise three machines, automated system 302 may comprise five machines, and automated system 303 may comprise one machine. It should be appreciated that the number machines of that comprise automated systems 301-303 or the automated processes they implement, are not limited. The individual machines that comprise automated systems 301-303 comprise pumps, compressors, heat exchanges, centrifuges, mills, conveyers, filters, and the like. The individual machines comprise subcomponents (not illustrated for clarity) like electrical circuitry, motors, processing circuitry, transceivers, machined parts, and the like.

Automated system 301 is coupled to PLC 311, automated system 302 is coupled to PLC 312, and automated system 303 is coupled to PLC 313. PLCs 311-313 receive and execute control instructions to implement their respective industrial processes. PLCs 311-313 transfer the executed instructions to automated systems 301-303 to implement their respective industrial processes. Automated systems 301-303 receive the executed instructions and responsively implement their automated industrial processes. For example, one of the machines in automated system 301 may comprise a motor driven conveyor belt and the control instructions may dictate a speed to operate the conveyor belt. PLC 311 may execute the control instructions and determine a current level to power electric motors to achieve the desired speed. PLC 311 may transfer the executed instructions to the conveyor in automated system 301. The conveyor in automated system 301 may receive the executed instructions and apply the indicated current level to achieve the necessary power level for the electric motor to drive the conveyor at the desired speed.

Automated systems 301-303 report performance metrics to PLCs 311-313 for the various machines that comprise automated systems 301-303. For example, automated system 302 may comprise a furnace and the furnace may report its operating temperature and run time to PLC 312. The performance metrics indicate the performance of automated systems 301-303. PLCs 311-313 report the performance metrics to data storage system 331 for storage. PLCs 311-313 also transfer their control instructions to data storage system 331 for storage.

Data storage system 331 comprises storage media like hard disk drive, solid state drives, RAMs, and the like. Data storage system 331 receives and stores the performance metrics and the control instructions from PLCs 311-313. Data storage system 331 may also receive control instructions and/or training data from external sources 321. External sources 321 may represent other industrial automation environments, other data repositories, online data sources, and the like. Data storage system 331 stores the control instructions from external sources 321. The control instructions stored by data storage system 331 comprise functional block diagrams, image files depicting functional block diagrams, control code, and the like. In some examples, data storage system generates feature vectors the represent the various data received from data sources 321, PLCs 311-313, and automated processes 301-303.

Cloud computing system 341 comprises data center 342. Data center 342 is representative of one or more computing devices integrated into a network that communicates with data storage system 331 and application 352. Examples of data center 342 may include server computers and data storage devices deployed on-premises, in the cloud, in a hybrid cloud, or elsewhere, by service providers such as enterprises, organizations, individuals, and the like. Data center 342 may rely on the physical connections provided by one or more other network providers such as transit network providers, Internet backbone providers, and the like to communicate with data storage system 331 and/or application 352. Data center 342 comprises server computer 343 which hosts machine learning model 344.

Server computer 343 comprises processors, bus circuitry, storage devices, software, and the like configured to host machine learning model 344. The processors may comprise Central Processing Units (CPUs), Graphical Processing Units (GPUs), Application Specific Integrated Circuits (ASICs), and the like. The storage devices comprise flash drives, Random Access Memory (RAM), Hard Disk Drives (HDDs), Solid State Drives (SSDs), Non-Volatile Memory Express (NVMe) SSDs, and the like. The storage devices store the software. The processors may retrieve and execute software stored on the storage devices to drive the operation of machine learning model 344.

Machine learning model 344 is hosted on server computer 343. Machine learning model 344 comprises one or more machine learning algorithms that are trained based on historical data and/or training data. Machine learning model 344 may employ one or more machine learning algorithms through which data can be analyzed to identify patterns, make decisions, make predictions, or similarly produce output that can inform control code and/or parameters. Examples of machine learning algorithms that may be employed solely or in conjunction with one another include artificial neural networks, nearest neighbor methods, ensemble random forests, support vector machines, naïve Bayes methods, linear regressions, or other types of machine learning algorithms that predict output data based on input data. Determining which machine learning methods to use may depend on the specific purpose or functions required in a particular industrial setting. Machine learning model 344 may receive control instructions, block diagrams, image files, performance metrics, and/other training data from data storage system 331. Machine learning model 344 may ingest the training data received from data storage system 331 to train itself. Machine learning model 344 may utilize supervised learning methods, unsupervised learning methods, and/or reinforcement learning methods to train itself. In some examples, machine learning model 344 generates an output that indicates an optimization to a functional block diagram received from application 352. In some examples machine learning model 344 generates an output that determines parameters, block suggestions, and/or settings to integrate into a functional block diagram received from application 352. In some examples, machine learning model 344 generates an output that indicates an error in a functional block diagram received from application 352.

In some examples, one or more images may be captured of a display on UI 353 that depicts completed functional block diagrams for implementation in industrial automation environment 300. The images may be provided to machine learning model 344 via server 343. Machine learning model 344 may be configured to analyze the images to train itself on the structure and format of completed functional block diagrams.

Programming environment 351 is representative of one or more computing devices integrated into a network configured to generate control instructions for industrial automation environment 300 and that communicate with cloud computing environment 341 and interacts with user 361. Programming environment 351 comprises application 352. Application 352 is representative of one or more design applications, machine learning interface applications, and user interface applications that are configured to generate functional block diagrams for implementation in industrial automation environment 300. The one or more computing devices that comprise programming environment 351 comprise processors, bus circuitry, storage devices, software, and the like. The processors may comprise Central Processing Units (CPUs), Graphical Processing Units (GPUs), Application Specific Integrated Circuits (ASICs), and the like. The storage devices comprise flash drives, Random Access Memory (RAM), Hard Disk Drives (HDDs), Solid State Drives (SSDs), Non-Volatile Memory Express (NVMe) SSDs, and the like. The storage devices store the software. The processors may retrieve and execute software stored on the storage devices to drive the operation of application 352.

UI 353 may include a display that provides a graphical representation of application 352. The graphical representation may include one or more visual indicators relevant to the control program, such as visual indicators of visual code blocks, ladder logic, code chunks, functional block diagrams, machine learning optimizations, and/or other types of visual indictors. UI 353 may comprise a faceplate for viewing or use by an operator (e.g., user 361) or similar user within programming environment 351. UI 353 may include a computer, a mobile device, a kiosk, a touchscreen device, a Human Machine Interface (HMI) or some other type of computing device capable of performing the UI functions described herein. User 361 may interact with application 352 via UI 353 to generate control instructions like a functional block diagram. Upon generation of the control instructions, application 352 may request machine learning analysis of the control instructions. For example, application 352 may generate feature vectors that represent the ladder logic of a functional block diagram generated by user 361 and transfer the feature vectors to server 343 for ingestion by machine learning model 344.

Machine learning model 344 may ingest the feature vectors that represent the control instructions like a functional block diagram as an input. Machine learning model 344 utilizes its trained algorithms to process the inputs to generate an output. For example, machine learning model 344 may intake a functional block diagram created by user 361 and generate an output that indicates an optimization to the functional block diagram. The output may comprise a recommendation, optimization, error alert, notification, or some other type of output. Server 343 may transfer or otherwise indicate the machine learning output to application 352 for presentation on UI 353. User 361 may review the machine learning output and elect to accept the output to modify the control instructions. Alternatively, user 361 may review the machine learning output and elect to reject the output to modify the control instructions.

In some examples, server 343 and application 352 may have a live connection with one another. Machine learning model 344 may ingest "work-in-progress" control instructions or otherwise incomplete control instructions and generate outputs to provide real-time or near real-time feedback on control instructions being generated by user 361 via UI 353. Machine learning model 344 may generate outputs that suggest code chunks, functional blocks, and the like to add to the "work-in-progress" control instructions.

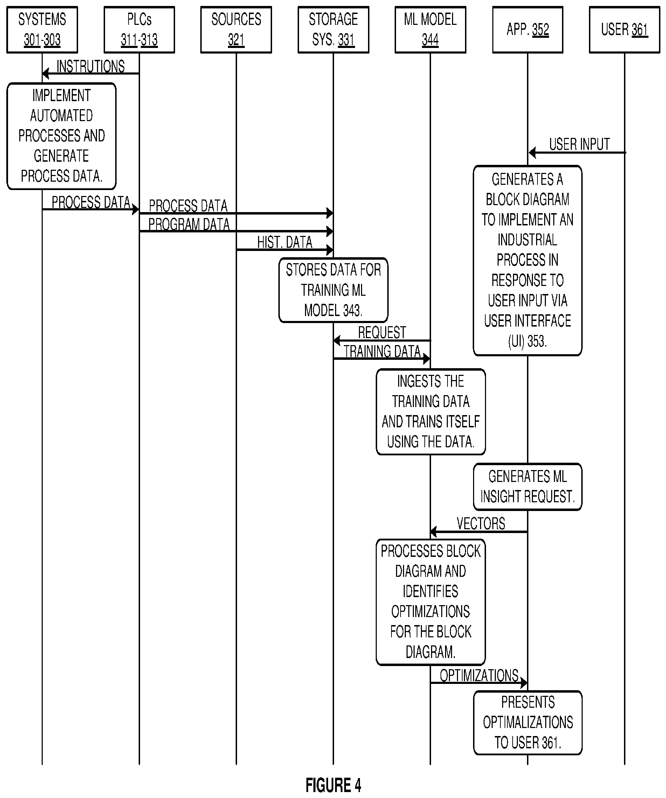

Figure 4 illustrates an exemplary operation of industrial automation environment 300 to optimize a functional block diagram for implementation by a PLC. The operation depicted by Figure 4 comprise an example of process 200 illustrated in Figure 2, however process 200 may differ. In other examples, the structure and operation of industrial automation environment 300 may be different.

In operation, PLCs 311-313 transfer control instructions to their respective ones of automated systems 301-303. For example, PLC 311 may execute and transfer a functional block diagram to initiate a process of automated system 331 via an industrial ethernet connection. Automated systems 301-303 receive the control instructions and responsively implement their automated processes. As automated systems 301-303 implement their automated processes, they generate process data that characterizes their respective automated processes. For example, automated system 303 may generate process data that comprises data like drying times, average conveyer belt speeds, power usage, and the like. It should be understood that the type of process data generated by automated systems 301-303 depends on the particular type of automated process that they carry out. Automated systems 301-303 transfer their process data to PLCs 311-313.

PLCs 311-313 receive the process data from PLCs 301-313 and transfer the process data to data storage system 331. PLCs 311-313 also transfer the control instructions to data storage system 331. Data storage system 331 receives and stores the process data and the control instructions. External sources 321 transfer historical data to data storage system 331. The historical data comprises functional block diagrams for completed projects, images that depict functional block diagrams, historical performance data for automate systems, and/or other data types suitable for training machine learning model 344. Data storage system 331 stores the historical data. In some examples, data storage system 331 may generate feature vectors based on the historical data, the process data, and the control instructions for ingestion by machine learning model 344.

Machine learning model 344 requests training data from data storage system 331. For example, machine learning model 344 may initiate a training request and server 343 in cloud computing system 341 may responsively transfer a training data request to storage system 331. Storage system 331 transfers training data for delivery to machine learning model 344 that comprises the historical data received from external sources 321, the process data generated by automated systems 301-303, the control instructions received from PLCs 311-313, and/or other types of training data. Machine learning model 344 receives and ingests the training data from data storage system 331. Machine learning model 344 trains its machine learning algorithms using the training data to identify patterns, make decisions, make predictions, or similarly produce outputs that can provide feedback on control instructions generated by programming environment 351.

Application 352 receives user input from user 361 via UI 353. The user input causes application 352 to generate a functional block diagram. The functional block diagram may be implemented by a PLC (e.g., PLC 311) to control an automated system (e.g., automated system 301). Application 352 generates a machine learning insight request to receive feedback on the functional block diagram. Application 352 generates feature vectors that represent the functional block diagram and transfers the feature vectors for delivery to machine learning model 344. For example, application 352 may generate an image of the functional block diagram and generate feature vectors based on an image and responsively transfer the feature vectors for ingestions by machine learning model 344. In some examples, application 352 may retrieve ladder logic that comprises the functional block diagram and generate feature vectors based on the ladder logic. In some examples, application 352 generates some other type of suitable machine learning input that represents the functional block diagram for ingestion by machine learning model 344.

Machine learning model 344 receives and ingests the functional block diagram as a machine learning input. Machine learning model 344 algorithmically processes the block diagram and identifies optimizations for the block diagram. For example, machine learning model 344 may utilize machine learning algorithms to compare ingested feature vectors that depict the block diagram to historical block diagram data to identify optimizations for the ingested block diagram. The optimizations may comprise block suggestions, block connection suggestions, error alerts, expected output results, and the like. For example, machine learning model 344 may determine the functional block diagram comprises an unusual or atypical configuration, and responsively flag the diagram as such. Machine learning model 344 transfers the optimizations for delivery to application 352. Upon reception, application 352 presents the suggested optimization(s) to user 361 via UI 353. User 361 may interact with UI 353 to implement or reject the suggested optimization to the functional block diagram. Once the function block diagram is complete, application 352 may transfer the functional block diagram to a PLC for implementation in industrial automation environment 300. For example, application 352 may transfer the modified functional block diagram for delivery to PLC 313 to implement automated process 303.

Advantageously, industrial automation environment 300 utilizes machine learning techniques to assist in editing control programs before the control program is implemented. Moreover, industrial automation environment 300 effectively and efficiently utilizes historical data and runtime data to train machine learning systems to optimize control programs like functional block diagrams.

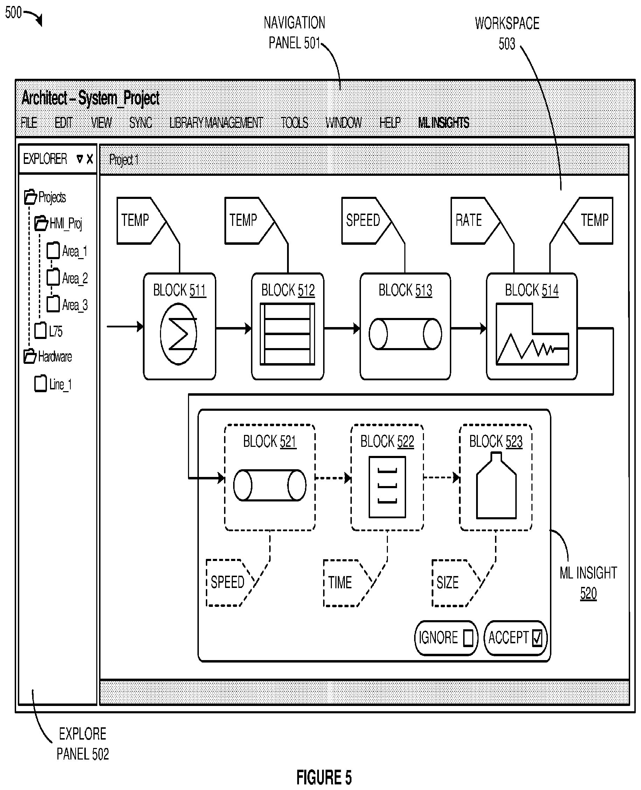

Figure 5 illustrates user interface 500 to apply machine learning optimizations into an industrial process. User interface 500 comprises an example of UI 102 and UI 353, however UI 102 and UI 353 may differ. User interface 500 comprises a programming environment presented on a display screen which is representative of any user interface for generating control code. For example, user interface 501 may comprise an HMI configured to allow a user to interact with a design application to generate control program represented as a functional block diagram.

User interface 500 includes navigation panel 501 that allows a user to access the various features available through user interface. Navigation panel 501 comprises tabs like "FILE", "EDIT", "VIEW", "LIBRARY MANAGEMENT", "TOOLS", "WINDOW", "HELP", and "ML INSIGHT". In other examples, navigation panel 501 may comprise fewer tabs, more tabs, and/or different types of tabs. A user may select a tab to access the functionality of the tab. Upon selection, the tabs may open drop down menus that list their functionality. For example, a user may select the "FILE" tab and select an option from a drop-down menu to save a project to memory. Navigation panel 501 is located on a top portion of user interface 500 however navigation panel 501 may be located on a different portion of user interface 500. For example, navigation panel 501 may be located on the bottom portion of user interface 500.

User interface 500 incudes explore panel 502. Explore 502 panel comprises a file navigation system that allows a user to access various projects and view information. The files comprise names like "Projects", "HMI_Proj", "Area_2", "Area_2", "Area_3", "L75", "Hardware", and "Line_1". The files are organized in a hierarchy. A user may select one of the files to access the contents stored within the file. For example, a user may select the "L75" folder to access its contents. Explore panel 502 is located on a left portion of user interface 500 however explore panel 502 may be located on a different portion of user interface 500. For example, explore panel 502 may be located on the right portion of user interface 500.

User interface includes workspace 503. Workspace 503 comprises blocks 511-514 that form a user generated functional block diagram. Blocks 511-514 each correspond to an industrial asset that may be used in an automated industrial system. In this example, block 511 is a condenser, block 512 is a heat exchange, block 513 is a conveyor system, and block 514 is a kneader. It should be noted that the types of equipment represented by blocks 511-514 are not limited and that in the examples, blocks 511-514 correspond to different types of equipment. A user may drag and drop blocks 511-514 on to workspace 503 to form the functional block diagram. Each of blocks 511-514 comprise underlying control code that dictates the operation of their corresponding industrial asset. The user may interact with the assets to specify the various operating parameters for each of the blocks. The connected blocks comprise a control program designed to drive an automated industrial process. Blocks 511-514 comprise settings labeled TEMP, SPEED, and RATE. The settings tabs may be configured by a user to specify various operating metrics for blocks 511-514. For example, A user may interact with the settings tab for block 512 to specify a desired temperature differential for a heat exchanger. The user may connect the blocks to define a process flow thereby creating a control program.

Machine learning (ML) insight 520 is representative of a machine learning output that comprises a recommendation to the functional block diagram. Machine learning insight 520 comprises suggested blocks 521-523 as well as "IGNORE" and "ACCEPT" buttons. Suggested block 521 is a conveyor belt system, suggested block 522 is a dryer, and suggested block 523 is a storage tank. The types of suggested blocks that comprises machine learning insight 520 and their connections are selected through machine learning analysis. In some examples, a user selects the "ML INSIGHTS" tab to trigger the generation of machine learning insight 520. A machine learning model may ingest the functional block diagram generated by the user in workspace 503 and output ML insight 520. The user may elect to ignore the insight 520 by selecting the "IGNORE" button or may elect to accept the machine learning output by selecting the "ACCEPT" button. Upon selection of the accept button, suggested blocks 521-523 are integrated into the functional block diagram. In other examples, machine learning insight 520 may comprise more, fewer, and/or different suggested blocks. In other examples, the connection between the blocks may differ.

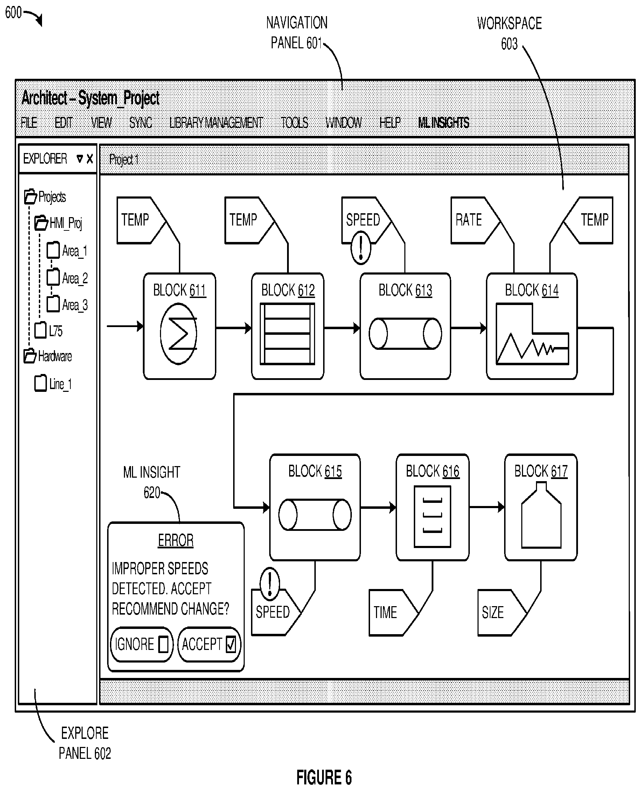

Figure 6 illustrates user interface 600 to apply machine learning optimizations into an industrial process. User interface 600 comprises an example of UI 102 and UI 353, however UI 102 and UI 353 may differ. User interface 600 comprises a programming environment presented on a display screen which is representative of any user interface for generating control code. For example, user interface 601 may comprise a display screen of a computing device that allows a user to interact with a design application to generate a control program formed by a functional block diagram.

User interface 600 includes navigation panel 601 that allows a user to access the various features available through user interface. Navigation panel 601 comprises tabs like "FILE", "EDIT", "VIEW", "LIBRARY MANAGEMENT", "TOOLS", "WINDOW", "HELP", and "ML INSIGHT". In other examples, navigation panel 601 may comprise fewer tabs, more tabs, and/or different types of tabs. A user may select a tab to access the functionality of the tab. Upon selection, the tabs may open drop down menus that list their functionality. For example, a user may select the "FILE" tab and select an option from a drop-down menu to save a project to memory. Navigation panel 601 is located on a top portion of user interface 600 however navigation panel 601 may be located on a different portion of user interface 600. For example, navigation panel 601 may be located on the bottom portion of user interface 600.

User interface 600 incudes explore panel 602. Explore 602 panel comprises a file navigation system that allows a user to access various projects and view information. The files comprise names like "Projects", "HMI_Proj", "Area_2", "Area_2", "Area_3", "L75", "Hardware", and "Line_1". The files are organized in a hierarchy. A user may select one of the files to access the contents stored within the file. For example, a user may select the "L75" folder to access its contents. Explore panel 602 is located on a left portion of user interface 600 however explore panel 602 may be located on a different portion of user interface 600. For example, explore panel 602 may be located on the right portion of user interface 600.

User interface 600 includes workspace 603. Workspace 603 comprises blocks 611-617 that form a user created functional block diagram. Blocks 611-617 each correspond to a piece of equipment that may be used in an automated industrial system. In this example, block 611 is a condenser, block 612 is a heat exchange, block 613 is a conveyor system, block 614 is a kneader, block 615 is a conveyor system, block 616 is a dryer, and block 617 is a storage tank. It should be noted that the types of equipment represented by blocks 611-617 are not limited and that in the examples, blocks 611-617 correspond to different types of equipment. A user may drag and drop blocks 611-617 on to workspace 603 to form the functional block diagram. The user may connect the blocks to define a process flow. The connected blocks form a functional block diagram that dictates control program to implement an automated industrial process. Blocks 611-617 comprise settings labeled TEMP, SPEED, SIZE, and RATE. The settings tabs may be configured by a user to specify various operating metrics for blocks 611-617. For example, a user may interact with the settings tab for block 617 to specify the desired size of a storage container. In other examples, the method the user specifies the individual block settings may differ.

Machine learning (ML) insight 620 is representative of a machine learning output that comprises an error alert for the functional block diagram. Machine learning insight 620 indicates that improper speeds are detected for blocks 613 and 615 and recommends a new speed setting for blocks 613 and 615. Machine learning insight 620 also comprises "IGNORE" and "ACCEPT" buttons that allow a user to implement the recommended change or ignore it. The type of suggested error/optimization that comprise machine learning insight 620 and their connections are determined through machine learning analysis. In some examples, a user selects the "ML INSIGHTS" tab to trigger the generation of machine learning insight 620. A machine learning model may ingest the functional block diagram generated by the user in workspace 603 and output machine insight 620. The user may elect to ignore insight 620 by selecting the "IGNORE" button or may elect to accept the machine learning output by selecting the "ACCEPT" button. Upon selection of the accept button, the recommended change is made to the speed settings for blocks 613 and 615. In other examples, machine learning insight 620 may comprise a different type of alert or optimization.

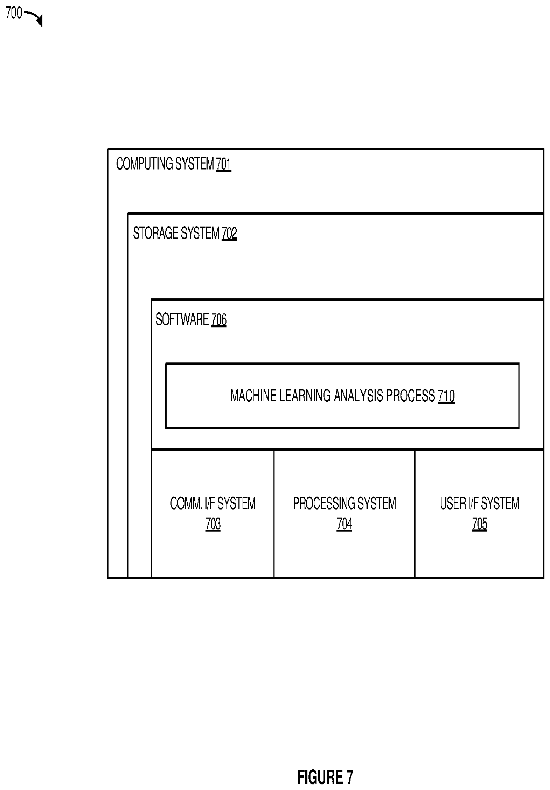

Figure 7 illustrates computing system 701 to perform machine learning model implementation according to an implementation of the present technology. Computing system 701 is representative of any system or collection of systems with which the various operational architectures, processes, scenarios, and sequences disclosed herein for utilizing machine learning models within industrial automation environments may be employed. For example, computing system 701 may be representative of computing device 101, machine learning model repository 111, server 343, programming environment 351, and/or any other computing device contemplated herein. Computing system 701 may be implemented as a single apparatus, system, or device or may be implemented in a distributed manner as multiple apparatuses, systems, or devices. Computing system 701 includes, but is not limited to, processing system 704, storage system 702, software 706, communication interface system 703, and user interface system 705 (optional). Processing system 704 is operatively coupled with storage system 702, communication interface system 703, and user interface system 705.

Processing system 704 loads and executes software 706 from storage system 702. Software 706 includes and implements machine learning analysis process 710, which is representative of any of the machine learning analysis processes discussed with respect to the preceding Figures, including but not limited to the industrial control, block diagram optimization, and machine learning model training. For example, machine learning analysis process 710 may be representative of process 200 illustrated in Figure 2 and/or the exemplary operation of environment 300 illustrated in Figure 4. When executed by processing system 704 to provide machine learning analysis functions, software 706 directs processing system 704 to operate as described herein for at least the various processes, operational scenarios, and sequences discussed in the foregoing implementations. Computing system 701 may optionally include additional devices, features, or functionality not discussed for purposes of brevity.

Processing system 704 may comprise a micro-processor and other circuitry that retrieves and executes software 706 from storage system 702. Processing system 704 may be implemented within a single processing device but may also be distributed across multiple processing devices or sub-systems that cooperate in executing program instructions. Examples of processing system 704 include general purpose central processing units, graphical processing units, application specific processors, and logic devices, as well as any other type of processing device, combinations, or variations thereof.

Storage system 702 may comprise any computer readable storage media readable by processing system 704 and capable of storing software 706. Storage system 702 may include volatile, nonvolatile, removable, and/or non-removable media implemented in any method or technology for storage of information, such as computer readable instructions, data structures, program modules, or other data. Examples of storage media include random access memory, read only memory, magnetic disks, optical disks. optical media, flash memory, virtual memory and non-virtual memory, magnetic cassettes, magnetic tape, magnetic disk storage or other magnetic storage devices, or any other suitable storage media. In no case is the computer readable storage media a propagated signal.

In addition to computer readable storage media, in some implementations storage system 702 may also include computer readable communication media over which at least some of software 706 may be communicated internally or externally. Storage system 702 may be implemented as a single storage device but may also be implemented across multiple storage devices or sub-systems co-located or distributed relative to each other. Storage system 702 may comprise additional elements, such as a controller, capable of communicating with processing system 704 or possibly other systems.

Software 706 (including machine learning analysis process 710) may be implemented in program instructions and among other functions may, when executed by processing system 704, direct processing system 704 to operate as described with respect to the various operational scenarios, sequences, and processes illustrated herein. For example, software 706 may include program instructions for generating machine learning optimizations on a functional block diagram or other types of control instructions as described herein.

In particular, the program instructions may include various components or modules that cooperate or otherwise interact to carry out the various processes and operational scenarios described herein. The various components or modules may be embodied in compiled or interpreted instructions, or in some other variation or combination of instructions. The various components or modules may be executed in a synchronous or asynchronous manner, serially or in parallel, in a single threaded environment or multi-threaded, or in accordance with any other suitable execution paradigm, variation. or combination thereof. Software 706 may include additional processes, programs, or components, such as operating system software, virtualization software, or other application software. Software 706 may also comprise firmware or some other form of machine-readable processing instructions executable by processing system 704.

In general, software 706 may, when loaded into processing system 704 and executed, transform a suitable apparatus, system. or device (of which computing system 701 is representative) overall from a general-purpose computing system into a special-purpose computing system customized to provide machine learning functionality to an industrial automation environment as described herein. Indeed, encoding software 706 on storage system 702 may transform the physical structure of storage system 702. The specific transformation of the physical structure may depend on various factors in different implementations of this description. Examples of such factors may include, but are not limited to, the technology used to implement the storage media of storage system 702 and whether the computer-storage media are characterized as primary or secondary storage, as well as other factors.

For example, if the computer readable storage media are implemented as semiconductor-based memory, software 706 may transform the physical state of the semiconductor memory when the program instructions are encoded therein, such as by transforming the state of transistors, capacitors, or other discrete circuit elements constituting the semiconductor memory. A similar transformation may occur with respect to magnetic or optical media. Other transformations of physical media are possible without departing from the scope of the present description, with the foregoing examples provided only to facilitate the present discussion.

Communication interface system 703 may include communication connections and devices that allow for communication with other computing systems (not shown) over communication networks (not shown). Examples of connections and devices that together allow for inter-system communication may include network interface cards, antennas, power amplifiers, radiofrequency circuitry, transceivers, and other communication circuitry. The connections and devices may communicate over communication media to exchange communications with other computing systems or networks of systems, such as metal, glass, air, or any other suitable communication media. The aforementioned media, connections, and devices are well known and need not be discussed at length here.

Communication between computing system 701 and other computing systems (not shown), may occur over a communication network or networks and in accordance with various communication protocols, combinations of protocols, or variations thereof. Examples include intranets, internets, the Internet, local area networks, wide area networks, wireless networks, wired networks, virtual networks, software defined networks, data center buses and backplanes, or any other type of network, combination of networks, or variation thereof. The aforementioned communication networks and protocols are well known and an extended discussion of them is omitted for the sake of brevity.

While some examples provided herein are described in the context of a firmware extension development or deployment device, it should be understood that the condition systems and methods described herein are not limited to such embodiments and may apply to a variety of other extension implementation environments and their associated systems. As will be appreciated by one skilled in the art, aspects of the present invention may be embodied as a system, method, computer program product, and other configurable systems. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer readable program code embodied thereon.

Unless the context clearly requires otherwise, throughout the description and the claims, the words "comprise," "comprising," and the like are to be construed in an inclusive sense, as opposed to an exclusive or exhaustive sense; that is to say, in the sense of "including, but not limited to." As used herein, the terms "connected," "coupled," or any variant thereof means any connection or coupling, either direct or indirect, between two or more elements; the coupling or connection between the elements can be physical, logical, or a combination thereof. Additionally, the words "herein," "above," "below," and words of similar import, when used in this application, refer to this application as a whole and not to any particular portions of this application. Where the context permits, words in the above Detailed Description using the singular or plural number may also include the plural or singular number respectively. The word "or" in reference to a list of two or more items, covers all of the following interpretations of the word: any of the items in the list, all of the items in the list, and any combination of the items in the list.

The phrases "in some embodiments," "according to some embodiments," "in the embodiments shown," "in other embodiments," and the like generally mean the particular feature, structure, or characteristic following the phrase is included in at least one implementation of the present technology and may be included in more than one implementation. In addition, such phrases do not necessarily refer to the same embodiments or different embodiments.

The above Detailed Description of examples of the technology is not intended to be exhaustive or to limit the technology to the precise form disclosed above. While specific examples for the technology are described above for illustrative purposes, various equivalent modifications are possible within the scope of the technology, as those skilled in the relevant art will recognize. For example, while processes or blocks are presented in a given order, alternative implementations may perform routines having steps, or employ systems having blocks, in a different order, and some processes or blocks may be deleted, moved, added, subdivided, combined, and/or modified to provide alternative or subcombinations. Each of these processes or blocks may be implemented in a variety of different ways. Also, while processes or blocks are at times shown as being performed in series, these processes or blocks may instead be performed or implemented in parallel or may be performed at different times. Further any specific numbers noted herein are only examples: alternative implementations may employ differing values or ranges.

The teachings of the technology provided herein can be applied to other systems, not necessarily the system described above. The elements and acts of the various examples described above can be combined to provide further implementations of the technology. Some alternative implementations of the technology may include not only additional elements to those implementations noted above, but also may include fewer elements.

These and other changes can be made to the technology in light of the above Detailed Description. While the above description describes certain examples of the technology, and describes the best mode contemplated, no matter how detailed the above appears in text, the technology can be practiced in many ways. Details of the system may vary considerably in its specific implementation, while still being encompassed by the technology disclosed herein. As noted above, particular terminology used when describing certain features or aspects of the technology should not be taken to imply that the terminology is being redefined herein to be restricted to any specific characteristics, features, or aspects of the technology with which that terminology is associated. In general, the terms used in the following claims should not be construed to limit the technology to the specific examples disclosed in the specification, unless the above Detailed Description section explicitly defines such terms. Accordingly, the actual scope of the technology encompasses not only the disclosed examples, but also all equivalent ways of practicing or implementing the technology under the claims.

To reduce the number of claims, certain aspects of the technology are presented below in certain claim forms, but the applicant contemplates the various aspects of the technology in any number of claim forms. For example, while only one aspect of the technology is recited as a computer-readable medium claim, other aspects may likewise be embodied as a computer-readable medium claim, or in other forms, such as being embodied in a means-plus-function claim.

## Claims

1. A system adapted to optimize a functional block diagram that corresponds to a control program in an industrial automation environment, the system comprising:
a memory configured to store executable components; and
a processor, operatively coupled to the memory, configured to execute the executable components, the executable components comprising:
a design application component configured to generate a functional block diagram (103) configured for implementation by a programmable logic controller (121, 311, 312, 313) to control an automated process;
a machine learning interface component configured to generate feature vectors based on the functional block diagram that are configured for ingestion by a machine learning model (112, 344) and supply the feature vectors to the machine learning model to obtain recommendation feedback on the functional block diagram from the machine learning model, wherein the feature vectors represent the functional block diagram and wherein the recommendation feedback indicates at least one of an error in the functional block diagram, a block recommendation for the functional block diagram, and a connection recommendation; and
the design application component configured to receive a machine learning output that comprises the recommendation feedback generated by the machine learning model component and responsively modify the functional block diagram based on the recommendation feedback.

2. The system of claim 1 further comprising:
the machine learning model being configured to ingest the feature vectors that represent the functional block diagram, compare the ingested feature vectors to historical functional block diagram data using machine learning algorithms, generate the machine leaming output based on the comparison, and transfer the machine learning output to the design application component.

3. The system of claim 1 or 2 further comprising:
a training component configured to receive historical functional block diagrams for the machine learning model component, generate additional feature vectors that represent the historical functional block diagrams for ingestion by the machine learning model component; and
the machine learning model configured to ingest the additional feature vectors and train itself using the additional feature vectors.

4. The system of one of claims 1 to 3 wherein:
generating the functional block diagram comprises generating an image that depicts the functional block diagram; and
generating the feature vectors that represent the functional block diagram comprises generating the feature vectors based on the image.

5. The system of one of claims 1 to 3 wherein:
generating the functional block diagram comprises generating ladder logic that depicts the functional block diagram; and
generating the feature vectors that represent the functional block diagram comprises generating the feature vectors based on the ladder logic.

6. A method to optimize a functional block diagram that corresponds to a control program in an industrial automation environment, the method comprising:
generating (201) a functional block diagram configured for implementation by a programmable logic controller to control an automated process;
generating (202) feature vectors based on the functional block diagram that are configured for ingestion by a machine learning model, wherein the feature vectors represent the functional block diagram;
supplying (203) the feature vectors to the machine learning model to obtain recommendation feedback on the functional block diagram from the machine learning model, wherein the recommendation feedback indicates at least one of an error in the functional block diagram, a block recommendation for the functional block diagram, and a connection recommendation; and
receiving (204) a machine learning output that comprises the recommendation feedback generated by the machine leaming model and responsively modifying (205) the functional block diagram based on the recommendation feedback.

7. The method of claim 6 further comprising:
ingesting, by the machine learning model, the feature vectors that represent the functional block diagram; and
comparing, by the machine learning model, the ingested feature vectors to historical functional block diagram data using machine learning algorithms, and responsively generating the machine learning output based on the comparison.

8. The method of claim 6 or 7 further comprising:
receiving historical functional block diagrams for the machine learning model;
generating additional feature vectors that represent the historical functional block diagrams for ingestion by the machine learning model;
and training the machine learning model based on the additional feature vectors.

9. The method of one of claims 6 to 8 wherein:
generating the functional block diagram comprises generating an image that depicts the functional block diagram; and
generating the feature vectors that represent the functional block diagram comprises generating the feature vectors based on the image.

10. The method of one of claims 6 to 9, wherein generating the functional block diagram comprises generating ladder logic that represents the functional block diagram, and wherein generating the feature vectors that represent the functional block diagram comprises generating the feature vectors based on the ladder logic.

11. A non-transitory computer-readable medium having stored thereon instructions to optimize a functional block diagram that corresponds to a control program in an industrial automation environment, wherein the instructions, in response to execution, cause a system comprising a processor to perform operations, the operations comprising:
generating (201) a functional block diagram configured for implementation by a programmable logic controller to control an automated process;
generating (202) feature vectors based on the functional block diagram that are configured for ingestion by a machine learning model, wherein the feature vectors represent the functional block diagram;
supplying (203) the feature vectors to the machine learning model to obtain recommendation feedback on the functional block diagram from the machine learning model, wherein the recommendation feedback indicates at least one of an error in the functional block diagram, a block recommendation for the functional block diagram, and a connection recommendation; and
receiving (204) a machine learning output that comprises the recommendation feedback generated by the machine leaming model and responsively modifying (205) the functional block diagram based on the recommendation feedback.

12. The non-transitory computer-readable medium of claim 11, the operations further comprising:
ingesting, by the machine learning model, the feature vectors that represent the functional block diagram; and
comparing, by the machine learning model, the ingested feature vectors to historical functional block diagram data using machine learning algorithms, and generating the machine learning output based on the comparison.

13. The non-transitory computer-readable medium of claim 11 or 12, the operations further comprising:
receiving historical functional block diagrams for the machine learning model;
generating additional feature vectors that represent the historical functional block diagrams for ingestion by the machine learning model; and
training the machine learning model using the additional feature vectors.

14. The non-transitory computer-readable medium of one of claims 11 to 13, wherein generating the functional block diagram comprises generating an image that depicts the functional block diagram, and wherein generating the feature vectors that represent the functional block diagram comprises generating the feature vectors based on the image.

15. The non-transitory computer-readable medium of one of claims 11 to 13, wherein:
generating the functional block diagram comprises generating ladder logic that represent the functional block diagram, and
generating the feature vectors that represent the functional block diagram comprises generating the feature vectors based on the ladder logic.

## Patentansprüche

1. System, das dazu angepasst ist, ein Funktionsblockdiagramm zu optimieren, das einem Steuerprogramm in einer industriellen Automatisierungsumgebung entspricht, wobei das System Folgendes umfasst:
einen Speicher, der dazu konfiguriert ist ausführbare Komponenten zu speichern; und
einen Prozessor, der betriebsfähig mit dem Speicher gekoppelt ist, dazu konfiguriert, die ausführbaren Komponenten auszuführen, wobei die ausführbaren Komponenten umfassen:
eine Entwurfsanwendungskomponente, die dazu konfiguriert ist, ein Funktionsblockdiagramm (103) zu generieren, das für die Implementierung durch eine programmierbare logische Steuerung (121, 311, 312, 313) konfiguriert ist, um einen automatisierten Prozess zu steuern;
eine Schnittstellen-Komponente für maschinelles Lernen, die dazu konfiguriert ist, Merkmalsvektoren basierend auf dem Funktionsblockdiagramm zu generieren, die für die Aufnahme durch ein Modell (112, 344) für maschinelles Lernen konfiguriert sind, und die Merkmalsvektoren an das Modell für maschinelles Lernen zu liefern, um ein Empfehlungs-Feedback über das Funktionsblockdiagramm von dem Modell für maschinelles Lernen zu erhalten, wobei die Merkmalsvektoren das Funktionsblockdiagramm darstellen und wobei das Empfehlungs-Feedback mindestens eines von einem Fehler in dem Funktionsblockdiagramm, einer Blockempfehlung für das Funktionsblockdiagramm und einer Verbindungsempfehlung angibt; und
die Entwurfsanwendungskomponente dazu konfiguriert ist, eine maschinelle Lernausgabe zu empfangen, die das von der Modellkomponente für maschinelles Lernen generierte Empfehlungs-Feedback umfasst, und das Funktionsblockdiagramm basierend auf dem Empfehlungsfeedback entsprechend zu modifizieren.

2. System nach Anspruch 1 des Weiteren umfassend:
das Modell für maschinelles Lernen, das dazu konfiguriert ist, die Merkmalsvektoren aufzunehmen, die das Funktionsblockdiagramm darstellen, die aufgenommenen Merkmalsvektoren mit historischen Funktionsblockdiagrammdaten unter Verwendung von Algorithmen für maschinelles Lernen zu vergleichen, die maschinelle Lernausgabe basierend auf dem Vergleich zu generieren und die maschinelle Lernausgabe an die Entwurfsanwendungskomponente zu übertragen.

3. System nach Anspruch 1 oder 2, des Weiteren umfassend:
eine Trainingskomponente, die dazu konfiguriert ist, historische Funktionsblockdiagramme für die Modellkomponente für maschinelles Lernen zu empfangen, zusätzliche Merkmalsvektoren zu generieren, die die historischen Funktionsblockdiagramme zur Aufnahme durch die Modellkomponente für maschinelles Lernen darstellen; und
das Modell für maschinelles Lernen, das dazu konfiguriert ist, die zusätzlichen Merkmalsvektoren aufzunehmen und sich selbst unter Verwendung der zusätzlichen Merkmalsvektoren zu trainieren.

4. System nach einem der Ansprüche 1 bis 3, wobei:
das Generieren des Funktionsblockdiagramms das Generieren eines Bildes umfasst, das das Funktionsblockdiagramm abbildet; und
das Generieren der Merkmalsvektoren, die das Funktionsblockdiagramm darstellen, das Generieren der Merkmalsvektoren basierend auf dem Bild umfasst.

5. System nach einem der Ansprüche 1 bis 3, wobei:
das Generieren des Funktionsblockdiagramms das Generieren von Leiterlogik umfasst, die das Funktionsblockdiagramm abbildet; und
das Generieren der Merkmalsvektoren, die das Funktionsblockdiagramm darstellen, das Generieren der Merkmalsvektoren basierend auf der Leiterlogik umfasst.

6. Verfahren zum Optimieren eines Funktionsblockdiagramms, das einem Steuerprogramm in einer industriellen Automatisierungsumgebung entspricht, wobei das Verfahren umfasst:
Generieren (201) eines Funktionsblockdiagramms, das für die Implementierung durch eine programmierbare logische Steuerung zum Steuern eines automatisierten Prozesses konfiguriert ist;
Generieren (202) von Merkmalsvektoren basierend auf dem Funktionsblockdiagramm, die zur Aufnahme durch ein Modell für maschinelles Lernen konfiguriert sind, wobei die Merkmalsvektoren das Funktionsblockdiagramm darstellen;
Liefern (203) der Merkmalsvektoren an das Modell für maschinelles Lernen, um ein Empfehlungs-Feedback zu dem Funktionsblockdiagramm von dem Modell für maschinelles Lernen zu erhalten, wobei das Empfehlungs-Feedback mindestens eines von einem Fehler in dem Funktionsblockdiagramm, einer Blockempfehlung für das Funktionsblockdiagramm und einer Verbindungsempfehlung angibt; und
Empfangen (204) einer maschinellen Lernausgabe, die das von dem Modell für maschinelles Lernen generierte Empfehlungs-Feedback umfasst, und als Reaktion darauf Modifizieren (205) des Funktionsblockdiagramms basierend auf dem Empfehlungs-Feedback.

7. Verfahren nach Anspruch 6, des Weiteren umfassend:
Aufnehmen, durch das Modell für maschinelles Lernen, der Merkmalsvektoren, die das Funktionsblockdiagramm darstellen; und
Vergleichen, durch das Modell für maschinelles Lernen, der aufgenommenen Merkmalsvektoren mit historischen Funktionsblockdiagrammdaten unter Verwendung von Algorithmen für maschinelles Lernen, und als Reaktion darauf Generieren der maschinellen Lernausgabe basierend auf dem Vergleich.

8. Verfahren nach Anspruch 6 oder 7, des Weiteren umfassend:
Empfangen von historischen Funktionsblockdiagrammen für das Modell für maschinelles Lernen;
Generieren von zusätzlichen Merkmalsvektoren, die die historischen Funktiosblockdiagramme darstellen, zur Aufnahme durch das Modell für maschinelles Lernen;
und Trainieren des Modells für maschinelles Lernen basierend auf den zusätzlichen Merkmalsvektoren.

9. Verfahren nach einem der Ansprüche 6 bis 8, wobei:
das Generieren des Funktionsblockdiagramms das Generieren eines Bildes umfasst, das das Funktionsblockdiagramm abbildet; und
das Generieren der Merkmalsvektoren, die das Funktionsblockdiagramm darstellen, das Generieren der Merkmalsvektoren basierend auf dem Bild umfasst.

10. Verfahren nach einem der Ansprüche 6 bis 9, wobei das Generieren des Funktionsblockdiagramms das Generieren von Leiterlogik umfasst, die das Funktionsblockdiagramm darstellt, und wobei das Generieren der Merkmalsvektoren, die das Funktionsblockdiagramm darstellen, das Generieren der Merkmalsvektoren basierend auf der Leiterlogik umfasst.

11. Nicht-transitorisches computerlesbares Medium, auf dem Befehle zur Optimierung eines Funktionsblockdiagramms gespeichert sind, das einem Steuerprogramm in einer industriellen Automatisierungsumgebung entspricht, wobei die Befehle als Reaktion auf die Ausführung ein System, das einen Prozessor umfasst, veranlassen, Operationen durchzuführen, wobei die Operationen Folgendes umfassen:
Generieren (201) eines Funktionsblockdiagramms, das für die Implementierung durch eine programmierbare logische Steuerung zum Steuern eines automatisierten Prozesses konfiguriert ist;
Generieren (202) von Merkmalsvektoren basierend auf dem Funktionsblockdiagramm, die zur Aufnahme durch ein Modell für maschinelles Lernen konfiguriert sind, wobei die Merkmalsvektoren das Funktionsblockdiagramm darstellen;
Liefern (203) der Merkmalsvektoren an das Modell für maschinelles Lernen, um ein Empfehlungs-Feedback zu dem Funktionsblockdiagramm von dem Modell für maschinelles Lernen zu erhalten, wobei das Empfehlungs-Feedback mindestens eines von einem Fehler in dem Funktionsblockdiagramm, einer Blockempfehlung für das Funktionsblockdiagramm und einer Verbindungsempfehlung angibt; und
Empfangen (204) einer maschinellen Lernausgabe, die das von dem Modell für maschinelles Lernen generierte Empfehlungs-Feedback umfasst, und als Reaktion darauf Modifizieren (205) des Funktionsblockdiagramms basierend auf dem Empfehlungs-Feedback.

12. Nicht-transitorisches computerlesbares Medium nach Anspruch 11, wobei die Operationen des Weiteren umfassen:
Aufnehmen, durch das Modell für maschinelles Lernen, der Merkmalsvektoren, die das Funktionsblockdiagramm darstellen; und
Vergleichen, durch das Modell für maschinelles Lernen, der aufgenommenen Merkmalsvektoren mit historischen Funktionsblockdiagrammdaten unter Verwendung von Algorithmen für maschinelles Lernen, und Generieren der maschinellen Lernausgabe basierend auf dem Vergleich.

13. Nicht-transitorisches computerlesbares Medium nach Anspruch 11 oder 12, wobei die Operationen des Weiteren umfassen:
Empfangen von historischen Funktionsblockdiagrammen für das Modell für maschinelles Lernen;
Generieren von zusätzlichen Merkmalsvektoren, die die historischen Funktionsblockdiagramme darstellen, zur Aufnahme durch das Modell für maschinelles Lernen; und
Trainieren des Modells für maschinelles Lernen unter Verwendung der zusätzlichen Merkmalsvektoren.

14. Nicht-transitorisches computerlesbares Medium nach einem der Ansprüche 11 bis 13, wobei das Generieren des Funktionsblockdiagramms das Generieren eines Bildes umfasst, das das Funktionsblockdiagramm abbildet, und wobei das Generieren der Merkmalsvektoren, die das Funktionsblockdiagramm darstellen, das Generieren der Merkmalsvektoren basierend auf dem Bild umfasst.

15. Nicht-transitorisches computerlesbares Medium nach einem der Ansprüche 11 bis 13, wobei:
das Generieren des Funktionsblockdiagramms das Generieren von Leiterlogik umfasst, die das Funktionsblockdiagramm darstellt, und
das Generieren der Merkmalsvektoren, die das Funktionsblockdiagramm darstellen, das Generieren der Merkmalsvektoren basierend auf der Leiterlogik umfasst.

## Revendications

1. Système adapté pour optimiser un diagramme de blocs fonctionnels qui correspond à un programme de commande dans un environnement d'automatisation industrielle, le système comprenant :
une mémoire configurée pour stocker des composants exécutables ; et
un processeur, couplé en fonctionnement à la mémoire, configuré pour exécuter les composants exécutables, les composants exécutables comprenant :
un composant d'application de conception configuré pour générer un diagramme de blocs fonctionnels (103) configuré pour une mise en œuvre par un contrôleur de logique programmable (121, 311, 312, 313) pour commander un processus automatisé ;
un composant d'interface d'apprentissage machine configuré pour générer des vecteurs de caractéristique selon le diagramme de blocs fonctionnels, qui sont configurés pour alimenter un modèle d'apprentissage machine (112, 344) et fournir les vecteurs de caractéristique au modèle d'apprentissage machine pour obtenir un retour d'information de recommandation sur le diagramme de blocs fonctionnels issu du modèle d'apprentissage machine, dans lequel les vecteurs de caractéristique représentent le diagramme de blocs fonctionnels et dans lequel le retour d'information de recommandation indique au moins une d'une erreur dans le diagramme de blocs fonctionnels, d'une recommandation de bloc pour le diagramme de blocs fonctionnels et d'une recommandation de connexion ; et
le composant d'application de conception configuré pour recevoir une sortie d'apprentissage machine qui comprend le retour d'information de recommandation généré par le composant de modèle d'apprentissage machine, et modifier réactivement le diagramme de blocs fonctionnels selon le retour d'information de recommandation.

2. Le système de la revendication 1 comprenant en outre :
le modèle d'apprentissage machine étant configuré pour ingérer les vecteurs de caractéristique qui représentent le diagramme de blocs fonctionnels, comparer les vecteurs de caractéristique ingérés à des données d'historique de diagramme de blocs fonctionnels en utilisant des algorithmes d'apprentissage machine, générer la sortie d'apprentissage machine selon la comparaison, et transférer la sortie d'apprentissage machine au composant d'application de conception.

3. Le système de la revendication 1 ou 2 comprenant en outre :
un composant d'entraînement configuré pour recevoir des diagrammes de blocs fonctionnels historiques pour le composant de modèle d'apprentissage machine, générer des vecteurs de caractéristique supplémentaires qui représentent les diagrammes de blocs fonctionnels historiques pour une ingestion par le composant de modèle d'apprentissage machine ; et
le modèle d'apprentissage machine configuré pour ingérer les vecteurs de caractéristique supplémentaires et s'entraîner lui-même en utilisant les vecteurs de caractéristique supplémentaires.

4. Le système de l'une des revendications 1 à 3 dans lequel :
une génération du diagramme de blocs fonctionnels comprend une génération d'une image qui décrit le diagramme de blocs fonctionnels ; et
une génération des vecteurs de caractéristique qui représentent le diagramme de blocs fonctionnels comprend une génération des vecteurs de caractéristique selon l'image.

5. Le système de l'une des revendications 1 à 3 dans lequel :
une génération du diagramme de blocs fonctionnels comprend une génération d'une logique Ladder qui décrit le diagramme de blocs fonctionnels ; et
une génération des vecteurs de caractéristique qui représentent le diagramme de blocs fonctionnels comprend une génération des vecteurs de caractéristique selon la logique Ladder.

6. Procédé pour optimiser un diagramme de blocs fonctionnels qui correspond à un programme de commande dans un environnement d'automatisation industrielle, le procédé comprenant :
une génération (201) d'un diagramme de blocs fonctionnels configuré pour une mise en œuvre par un contrôleur de logique programmable pour contrôler un processus automatisé ;
une génération (202) de vecteurs de caractéristique selon le diagramme de blocs fonctionnels qui sont configurés pour une ingestion par un modèle d'apprentissage machine, dans lequel les vecteurs de caractéristique représentent le diagramme de blocs fonctionnels ;
une fourniture (203) des vecteurs de caractéristique au modèle d'apprentissage machine pour obtenir un retour d'information de recommandation sur le diagramme de blocs fonctionnels issu du modèle d'apprentissage machine, dans lequel le retour d'information de recommandation indique au moins une d'une erreur dans le diagramme de blocs fonctionnels, d'une recommandation de bloc pour le diagramme de blocs fonctionnels et d'une recommandation de connexion ; et
une réception (204) d'une sortie d'apprentissage machine qui comprend le retour d'information de recommandation généré par le modèle d'apprentissage machine, et une modification réactive (205) du diagramme de blocs fonctionnels selon le retour d'information de recommandation.

7. Le procédé de la revendication 6 comprenant en outre :
une ingestion, par le modèle d'apprentissage machine, des vecteurs de caractéristique qui représentent le diagramme de blocs fonctionnels ; et
une comparaison, par le modèle d'apprentissage machine, des vecteurs de caractéristique ingérés à des données d'historique de diagramme de blocs fonctionnels en utilisant des algorithmes d'apprentissage machine, et une génération réactive de la sortie d'apprentissage machine selon la comparaison.

8. Le système de la revendication 6 ou 7 comprenant en outre :
une réception de diagrammes de blocs fonctionnels historiques pour le modèle d'apprentissage machine ;
une génération de vecteurs de caractéristique supplémentaires qui représentent les diagrammes de blocs fonctionnels historiques pour une ingestion par le modèle d'apprentissage machine ;
et un entraînement du modèle d'apprentissage machine selon les vecteurs de caractéristique supplémentaires.

9. Le procédé de l'une des revendications 6 à 8 dans lequel :
une génération du diagramme de blocs fonctionnels comprend une génération d'une image qui décrit le diagramme de blocs fonctionnels ; et
une génération des vecteurs de caractéristique qui représentent le diagramme de blocs fonctionnels comprend une génération des vecteurs de caractéristique selon l'image.

10. Le procédé de l'une des revendications 6 à 9, dans lequel une génération du diagramme de blocs fonctionnels comprend une génération d'une logique Ladder qui représente le diagramme de blocs fonctionnels, et dans lequel une génération des vecteurs de caractéristique qui représentent le diagramme de blocs fonctionnels comprend une génération des vecteurs de caractéristique selon la logique Ladder.

11. Support non transitoire lisible par un ordinateur ayant stockées en son sein des instructions pour optimiser un diagramme de blocs fonctionnels qui correspond à un programme de commande dans un environnement d'automatisation industrielle, dans lequel les instructions, en réaction à une exécution, entraînent l'exécution d'opérations par un système comprenant un processeur, les opérations comprenant :
une génération (201) d'un diagramme de blocs fonctionnels configuré pour une mise en œuvre par un contrôleur de logique programmable pour contrôler un processus automatisé ;
une génération (202) de vecteurs de caractéristique selon le diagramme de blocs fonctionnels qui sont configurés pour une ingestion par un modèle d'apprentissage machine, dans lequel les vecteurs de caractéristique représentent le diagramme de blocs fonctionnels ;
une fourniture (203) des vecteurs de caractéristique au modèle d'apprentissage machine pour obtenir un retour d'information de recommandation sur le diagramme de blocs fonctionnels issu du modèle d'apprentissage machine, dans lequel le retour d'information de recommandation indique au moins une d'une erreur dans le diagramme de blocs fonctionnels, d'une recommandation de bloc pour le diagramme de blocs fonctionnels et d'une recommandation de connexion ; et
une réception (204) d'une sortie d'apprentissage machine qui comprend le retour d'information de recommandation généré par le modèle d'apprentissage machine, et une modification réactive (205) du diagramme de blocs fonctionnels selon le retour d'information de recommandation.

12. Le support non transitoire lisible par un ordinateur de la revendication 11, les opérations comprenant en outre :
une ingestion, par le modèle d'apprentissage machine, des vecteurs de caractéristique qui représentent le diagramme de blocs fonctionnels ; et
une comparaison, par le modèle d'apprentissage machine, des vecteurs de caractéristique ingérés à des données d'historique de diagramme de blocs fonctionnels en utilisant des algorithmes d'apprentissage machine, et une génération de la sortie d'apprentissage machine selon la comparaison.

13. Le support non transitoire lisible par un ordinateur de la revendication 11 ou 12, les opérations comprenant en outre :
une réception de diagrammes de blocs fonctionnels historiques pour le modèle d'apprentissage machine ;
une génération de vecteurs de caractéristique supplémentaires qui représentent les diagrammes de blocs fonctionnels historiques pour une ingestion par le modèle d'apprentissage machine ; et
un entraînement du modèle d'apprentissage machine en utilisant les vecteurs de caractéristique supplémentaires.

14. Le support non transitoire lisible par un ordinateur de l'une des revendications 11 à 13, dans lequel une génération du diagramme de blocs fonctionnels comprend une génération d'une image qui décrit le diagramme de blocs fonctionnels, et dans lequel une génération des vecteurs de caractéristique qui représentent le diagramme de blocs fonctionnels comprend une génération des vecteurs de caractéristique selon l'image.

15. Le support non transitoire lisible par un ordinateur de l'une des revendications 11 à 13, dans lequel :
une génération du diagramme de blocs fonctionnels comprend une génération d'une logique Ladder qui représente le diagramme de blocs fonctionnels, et
une génération des vecteurs de caractéristique qui représentent le diagramme de blocs fonctionnels comprend une génération des vecteurs de caractéristique selon la logique Ladder.
